# EUROPEAN PATENT SPECIFICATION

(11) **EP 1 504 874 B1**
(45) Date of publication and mention of the grant of the patent: **25.11.2009**
(21) Application number: 04018119.0
(22) Date of filing: 30.07.2004
(51) Int. Cl.: B29C 45/40

(54) **A mold for injection molding and a method of operating a mold**
Spritzgiessformwerkzeug und Verfahren zum Betrieben desselben
Moule pour une presse à injecter et son procédé de fonctionnement

(30) Priority: 06.08.2003 JP 2003287415
(43) Date of publication of application: 09.02.2005
(73) Proprietor: Sumitomo Wiring Systems, Ltd., Yokkaichi-city, Mie 510-8503 (JP)
(72) Inventor: Hattori, Naoya, Yokkaichi-city Mie 510-8503 (JP); Kurosawa, Seiichi, Yokkaichi-city Mie 510-8503 (JP); Tsutsui, Shinsuke, Yokkaichi-city Mie 510-8503 (JP); Muraki, Toshiya, Yokkaichi-city Mie 510-8503 (JP); Muramoto, Yumiko, Yokkaichi-city Mie 510-8503 (JP)
(74) Representative: Müller-Boré & Partner Patentanwälte

(56) References cited:
- DE-C- 19 616 008
- PATENT ABSTRACTS OF JAPAN vol. 0093, no. 22 (M-440), 18 December 1985 (1985-12-18) -& JP 60 157822 A (SANKIYOU KASEI KK), 19 August 1985 (1985-08-19)
- PATENT ABSTRACTS OF JAPAN vol. 1998, no. 12, 31 October 1998 (1998-10-31) -& JP 10 180805 A (NEC HOME ELECTRON LTD), 7 July 1998 (1998-07-07)
- PATENT ABSTRACTS OF JAPAN vol. 0071, no. 77 (M-233), 5 August 1983 (1983-08-05) -& JP 58 078734 A (SEIKOUSHIYA:KK), 12 May 1983 (1983-05-12)
- PATENT ABSTRACTS OF JAPAN vol. 1999, no. 09, 30 July 1999 (1999-07-30) -& JP 11 090959 A (AONO KOGYO:KK), 6 April 1999 (1999-04-06)

## Description

The present invention relates to a mold assembly for injection molding provided with a fixed mold and a movable mold and to a method of operating a mold assembly for injection molding.

Generally, in the resin injection molding, a molded article is taken out after having the following steps (see Japanese Unexamined Patent Publication No. H05-245888 and Japanese Unexamined Patent Publication No. H11-151735).
(1) Molding step of filling a molten resin into a cavity in a mold with a fixed mold and a movable mold closed, and cooling the resin to solidify it.
(2) Mold-opening step of separating the movable mold from the fixed mold.
(3) Take-out step of driving an ejector pin located at its initial position to displace it to a thrust-out position, thereby taking a molded article out of the mold.
(4) Returning step of returning the ejector pin to the initial position.
(5) Mold-closing step of moving the movable mold toward the fixed mold to close the mold.

In the case of performing the above steps, the take-out step has to follow the mold-opening step. Thus, both a time required to open the mold and a time required to take out the molded article are needed, which tends to make a molding cycle longer. Further, since an ejecting device provided with a hydraulic cylinder in a molding apparatus causes the ejector pin to project, a space for installing such an ejecting device has been necessary.

JP-A-60157822 discloses an injection molding machine comprising a sprue bush, a gate cutting sleeve pin, a support plate and a sprue lock pin.

JP-A-10180805 discloses an ejector mechanism comprising a hooked pin provided to a cavity mold and a core type pin with hook for taking out a molded Product.

JP-A-58078734 discloses a molding device comprising an ejector plate operated to move forward ejector pins, while compressed air is injected from the ejector pin to release a molded article from a concave die.

Thus, according to an aspect, it is a problem to provide a mold assembly which can easily be assembled/disassembled in order to interchange a fixed and/or movable mold for molding different articles. Further a corresponding method of operating a mold assembly shall be provided.

This problem is fulfilled by a mold assembly having the features disclosed in claim 1 and a method having the features disclosed in claim 8. Preferred embodiments are defined in the dependent claims.

According to the invention, there is provided a mold assembly for injection molding, comprising:
a fixed mold,
a movable mold arranged to be movable with respect to the fixed mold,
an ejector member, and
an ejector plate which is movable with respect to the movable mold and supports the ejector pin,
wherein the fixed mold includes at least a first engaging member and at least a second engaging member, and the engaging members (directly and/or indirectly) engaging or interfering with the ejector plate in the process of separating the movable mold at the time of opening the mold, whereby the ejector plate is moved forward relative to the movable mold to cause a leading end portion of the ejector member to at least partly project from the movable mold, the second engaging member being provided substantially opposed to the first engaging member,
wherein the engaging members are dividable into leading-end portions and base-end portions by a coupling portion provided with a screw fastening function, and the ejector member being configured to thrust out a molded article attached to the movable mold when the ejector plate reaches a mold opening position.

In the process of separating the movable mold, the engaging member of the fixed mold (directly/indirectly) interferes with or engages the ejector plate, whereby the ejector plate is moved relative to the movable mold and the ejector member at least partly projects from the movable mold. Thus, the molded article can be taken out during a mold opening step, making it unnecessary to take the molded article in a separate step. As a result, a molding cycle can be shortened. Further, since the ejector member is thrust out from the movable mold due to the interference or engagement of the engaging member and the ejector plate, it is not necessary to separately provide an ejecting device for moving the ejector member forward and backward, thereby advantageously enabling the mold and a molding apparatus to be made smaller.

According to a preferred embodiment of the invention, the engaging member projecting toward the movable mold.

Preferably, the ejector plate which is so incorporated into or mounted to the movable mold as to be movable forward and backward.

According to a preferred embodiment of the invention, there is provided a mold assembly for injection molding, comprising:
a fixed mold,
a movable mold arranged to be movable toward and away from the fixed mold,
an ejector pin, and
an ejector plate which is so incorporated into the movable mold as to be movable forward and backward while supporting the ejector pin,
wherein the fixed mold includes at least a first engaging pin and a second engaging pin both projecting toward the movable mold, and the engaging pins interferes with the ejector plate in the process of separating the movable mold at the time of opening the mold, whereby the ejector plate is moved forward relative to the movable mold to cause a leading end portion of the ejector pin to project from the movable mold the second engaging pin being provided substantially opposed to the first engaging pin,
wherein the engaging pins are dividable into leading-end portions and base-end portions by a coupling portion provided with a screw fastening function, and the ejector member being configured to thrust out a molded article attached to the movable mold when the ejector plate reaches a mold opening position.

The movable mold is separated from the fixed mold after a molten resin is filled into a cavity space formed when the fixed mold and the movable mold are closed, and cooled to be solidified. In the process of separating the movable mold, the engaging pin of the fixed mold interferes with the ejector plate, whereby the ejector plate is moved forward relative to the movable mold and the leading end portion of the ejector pin projects from the movable mold. Thus, the molded article can be taken out during a mold opening step, making it unnecessary to take the molded article in a separate step. As a result, a molding cycle can be shortened. Further, since the ejector pin is thrust out from the movable mold due to the interference of the engaging pin and the ejector plate, it is not necessary to separately provide an ejecting device for moving the ejector pin forward and backward, thereby enabling the mold and a molding apparatus to be made smaller.

Preferably, the ejector plate is formed with an engaging hole through which a shaft portion of the engaging member is at least partly insertable, and a projecting portion which (preferably radially) projects from shaft portion, preferably has a diameter larger than the inner diameter of the engaging hole, and can interfere with the opening edge of the engaging hole of the ejector plate is formed at the leading end of the shaft portion of the engaging member.

Further preferably, the ejector plate is formed with an engaging hole through which a shaft portion of the engaging pin is at least partly insertable, and a large-diameter portion which has a diameter larger than the inner diameter of the engaging hole and can interfere with the opening edge of the engaging hole of the ejector plate is formed at the leading end of the shaft portion of the engaging pin.

The large-diameter portion which has a larger diameter than the inner diameter of the engaging hole of the ejector plate and can interfere with the opening edge of the engaging hole of the ejector plate is provided at the leading end of the shaft portion of the engaging member or engaging pin. Thus, the engagement member or engaging pin preferably directly comes substantially into engagement with the ejector plate, thereby securing the thrusting-out movement of the ejector member or ejector pin.

Still further preferably, the movable mold is formed with an insertion hole for permitting the entrance and exit of the leading end of the engaging member or engaging pin thereinto and therefrom preferably by communicating with the engaging hole.

Since the movable mold is formed with the insertion hole for permitting the entrance and exit of the leading end of the engaging member or engaging pin thereinto and therefrom by communicating with the engaging hole, the engaging member or engaging pin needs not be entirely accommodated in the mold. As a result, the mold can be made even smaller by being made thinner.

Still further preferably, the ejector plate is held substantially in contact with the movable mold by the biasing force of a biasing member unless being moved relative to the movable member due to the engagement of the engaging member with the ejector plate

According to the invention, the engaging member comprises a coupling portion so as to be dismountable or separable into two or more pieces.

According to the invention, there is further provided a method of operating a mold assembly, in particular according to the invention or a preferred embodiment thereof, for injection molding for thrusting out a molded article attached thereto, the comprising a fixed mold, a movable mold arranged to be movable with respect to the fixed mold and an ejector member, the method comprising the following steps:
moving the movable member with respect to the fixed mold so as to at least partly open the mold, and
moving the ejector member for thrusting out a molded article attached to the mold by (directly and/or indirectly) engaging or interfering an ejector plate which is movable with respect to the movable mold and supports the ejector member with at least a first engaging member and at least a second engaging member both provided on the fixed mold, whereby the ejector plate is moved forward relative to the movable mold to cause a leading end portion of the ejector member to at least partly project from the movable mold,
providing said at least second engaging member substantially opposed to the first engaging member,
dividing the engaging member into leading-end portions and base-end portions by a coupling portion provided with a screw fastening function, and
thrusting out a molded article attached to the movable mold when the ejector plate reaches a mold opening position.

According to a preferred embodiment of the invention, the method further comprises a step of holding the ejector plate substantially in contact with the movable mold by the biasing force of a biasing member unless the ejector plate is moved relative to the movable member due to the engagement of the engaging member with the ejector plate.

Preferably, the leading end of the engaging member is at least partly inserted into and retracted from an insertion hole of the movable mold.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section showing a closed state of a mold for injection molding according to one embodiment of the invention,
FIG. 2 is a section showing a state where a molten resin is filled into a cavity,
FIG. 3 is a section showing an intermediate state of the separation of a movable mold from a fixed mold, and
FIG. 4 is a section showing a thrust-up state.

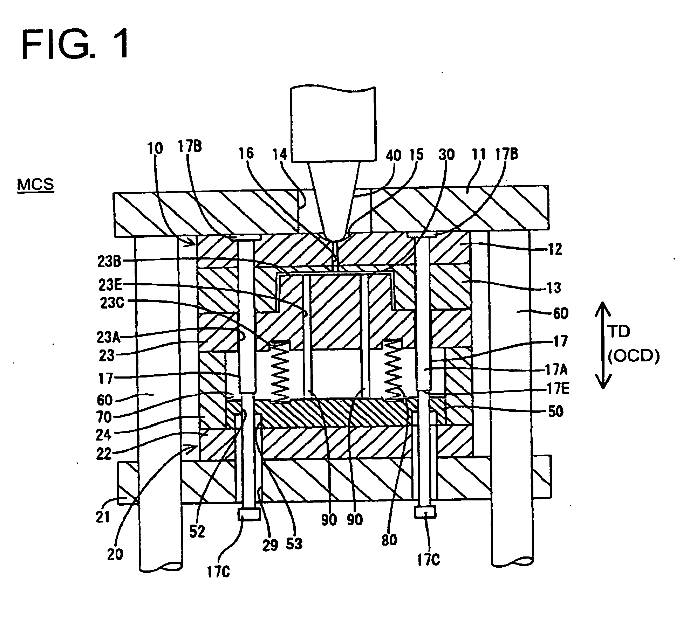

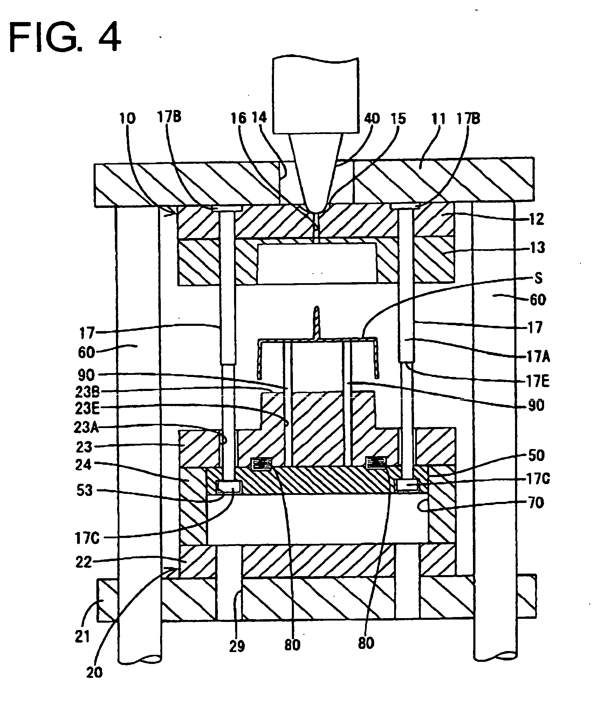

Hereinafter, one preferred embodiment of the present invention is described with reference to FIGS. 1 to 4. A mold for injection molding according to this embodiment is, as shown in FIG. 1, provided with a fixed mold 10 and a movable mold 20 arranged to be movable toward and away from or with respect to the fixed mold 10 and adapted to form or define a cavity space 30 in cooperation with the fixed mold 10 at the time of closing the mold.

The fixed mold 10 includes a fixed platen 11 fixed to a molding apparatus, a fixed mounting plate 12 mounted or mountable on the fixed platen 11, and a fixed molding plate 13 mounted or mountable on this fixed mounting plate 12. The fixed platen 11 is formed with a through hole 14 through which an injection nozzle 40 at least partly passes, whereas the fixed mounting plate 12 is formed with a resin inflow opening 15 communicating with the through hole 14 and preferably having a concave or converging surface. A gate or passage 16 preferably having a smaller diameter extends from the resin inflow opening 15 through the fixed molding plate 13 to substantially communicate with the cavity space 30.

In the fixed mold 10, one or more engaging pins 17 projecting toward the movable mold 20 are provided at one or more positions preferably substantially opposed to each other with or substantially point symmetric with respect to the center of the fixed mold 10 located preferably substantially in the middle. Each engaging pin 17 includes a shaft portion 17A extending substantially straight along its longitudinal direction, a collar 17B bulging out from the base end or base end portion of the shaft portion 17A and at least partly exposed at a surface of the fixed mounting plate 12 substantially facing the fixed platen 11, and a large-diameter portion 17C formed at the leading end of the shaft portion 17A to bulge out and engageable with an ejector plate 50 to be described later. The shaft portions 17A of the engaging pins 17 have such a length as to penetrate from the fixed mold 10 to the movable mold 20 substantially along the thickness direction TD or the opening and closing direction OCD of the molds 10, 20. Further, a coupling portion 17E provided with a screw fastening function is formed at an intermediate position (preferably substantially a middle position) with respect to the longitudinal direction of the shaft portion 17A of each engaging pin 17, and the engaging pin 17 can be divided at this coupling portion 17E.

One or more guiding bars 60 extending toward the movable mold 20 substantially in parallel with the shaft portions 17A of the engaging pins 17 at the outer sides of the fixed mounting plate 12 and the fixed molding plate 13 are secured or securable to the fixed platen 11.

The movable mold 20 is made movable by the one or more guiding bars 60 between a mold-closing position where the movable mold 20 is in contact with the fixed molding plate 13 and a mold-opening position spaced apart from the mold-closing position. The movable mold 20 includes a movable platen 21, a movable mounting plate 22 mounted or mountable on the movable platen 21, a movable molding plate 23 spaced apart from the movable mounting plate 22 by a specified (predetermined or predeterminable) distance, and a spacing portion 24 to be provided between the movable molding plate 23 and the movable mounting plate 22. An accommodating section 70 for the ejector plate 50 is provided in an inner space held to have a specified (predetermined or predeterminable) dimension by the spacing portion 24.

The ejector plate 50 preferably is constantly biased in a direction away from the fixed mold 10 by a biasing means preferably comprising one or more spring portions 80 such as compression coil springs incorporated into the accommodating section 70 of the movable mold 20 in such a manner as to be movable forward and backward substantially along the longitudinal direction or the opening and closing direction OCD and at least partly provided between the ejector plate 50 and the movable molding plate 23. One or more, preferably a plurality of ejector members or pins 90 projecting toward the fixed mold 10 are provided at positions preferably substantially opposed to each other with or substantially point symmetric with respect to the center of the ejector plate 50 substantially in the middle, and the base ends thereof are fixedly supported on or mounted to the ejector plate 50.

The ejector plate 50 is formed with one or more engaging holes 52 at positions substantially corresponding to the engaging pins 17. Each engaging hole 52 has an inner diameter substantially equal to the outer diameter of the shaft portion 17A so that the shaft portion 17A can be at least partly inserted through the engaging hole 52, and one end thereof substantially communicates with the accommodating section 70. The other end of each engaging hole 52 communicates with a recess 53 which is formed to preferably have a diameter substantially larger than that of the engaging hole 52 and substantially exposed toward the movable mounting plate 22. The large-diameter portion 17C of the engaging pin 17 comes substantially into contact with the bottom surface of the recess 53 substantially corresponding to the opening edge of the engaging hole 52 in the process of separating the movable mold 20 from the fixed mold 10 during the mold opening. The movable mold 20 is moved further backward or substantially away from the fixed mold 10 while the large-diameter portions 17C of the engaging pins 17 and the bottom surfaces of the recesses 53 interfere with each other, whereby the ejector plate 50 is moved forward relative to the movable mold 20 against biasing forces of the spring portions 80.

The movable molding plate 23 is formed with one or more through holes 23A, through which the shaft portions 17A of the engaging pins 17 are loosely insertable, at positions substantially corresponding to the engaging pins 17. A surface of the movable molding plate 23 substantially facing the cavity space 30 serves as an attachment surface 23B to which a molded article S is to be attached, whereas spring holding portions 23C for at least partly accommodating contracted spring portions 80 are formed in a surface of the movable molding plate 23 substantially facing the accommodation space. The movable molding plate 23 is also formed with one or more guiding holes 23E for guiding the respective ejector pins 90. The leading ends of the ejector pins 90 are located substantially in flush with or (preferably slightly) retracted from the attachment surface 23B of the movable molding plate 23 when the mold is closed. At the time of opening the mold, the ejector plate 50 is moved forward relative to the movable plate 20 due to the interference of the engaging pins 17 and the ejector plate 50 in the process of separating the movable mold 20 from the fixed mold 10, whereby the leading ends of the ejector pins 90 at least partly project from the attachment surface 23B of the movable molding plate 23.

The movable mounting plate 22 and the movable platen 21 are formed with one or more insertion holes 29 penetrating both of them in thickness direction TD and substantially communicating with the respective recesses 53 of the ejector plate 50. Leading end portions of the engaging pins 17 can at least partly enter and exit from the insertion holes 29 as the movable mold 20 makes a relative movement. The inner diameter of the insertion holes 29 preferably is substantially equal to that of the recesses 53, whereby the large-diameter portions 17C of the engaging pins 17 are at least partly insertable into the insertion holes 29. The insertion holes 29, the engaging holes 52, the recesses 53, the through holes 23A are substantially coaxially arranged along the corresponding shaft portions 17A of the engaging pins 17.

Next, the functions of this embodiment are described.

First, the mold is closed by moving the movable mold 20 toward the fixed mold 10. In this mold-closed state MCS, as shown in FIG. 1, the cavity space 30 is defined between the movable molding plate 23 of the movable mold 20 and the fixed molding plate 13 of the fixed mold 10; the ejector plate 50 is held substantially in contact with the movable mounting plate 22 of the movable mold 20 by the biasing forces of the one or more spring portions 80 as a preferred biasing member; and the large-diameter portion(s) 17C of the engaging pin(s) 17 are at least partly exposed to outside through the insertion holes 29 of the movable platen 21. Since the engaging pins 17 can be divided into leading-end portions and base-end portions preferably with the coupling portions 17E as boundaries, the leading-end portions and the base-end portions can be coupled to each other if the leading-end portions are at least partly inserted into the mold through the insertion holes 29 and the large-diameter portions 17C are screwed after the mold is substantially closed.

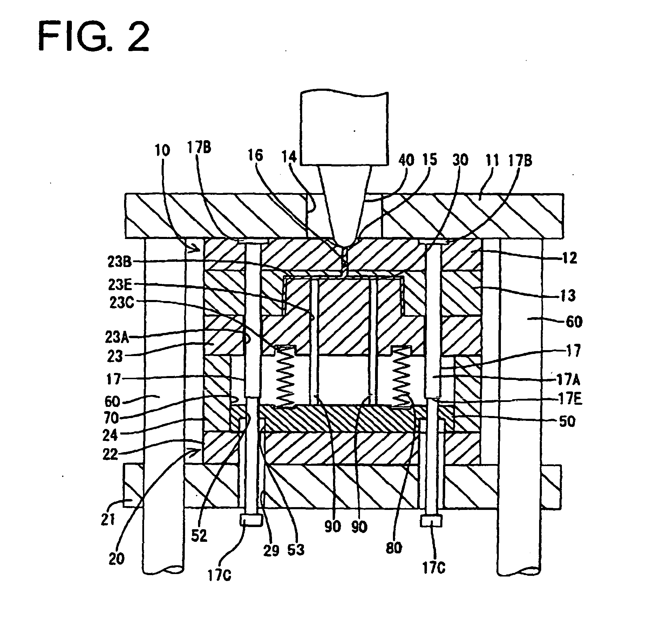

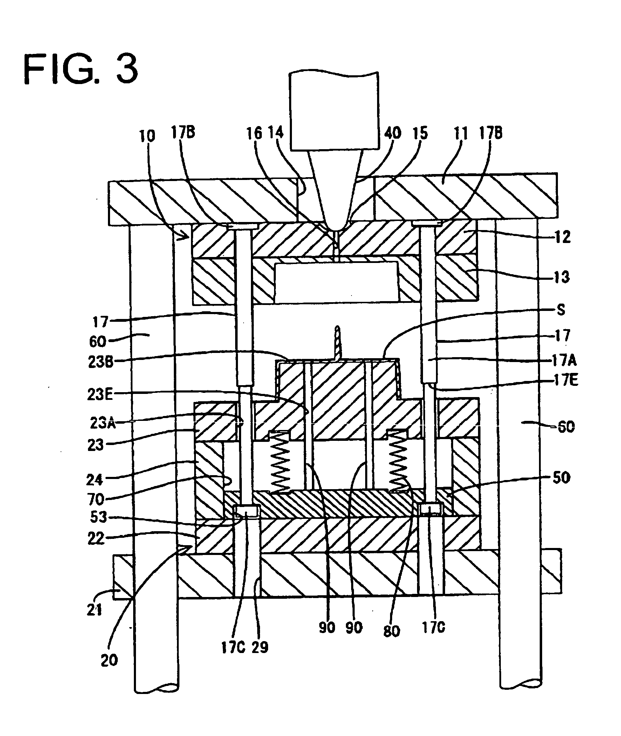

Subsequently, as shown in FIG. 2, a molten resin as a preferred molding material is injected from the injection nozzle 40 to be filled into the cavity space through the resin inflow opening 15 and the gate 16, and cooled to be substantially solidified or cured. Then, the movable mold 20 is slid substantially along the guiding bars 60 by an unillustrated driving mechanism to be separated from the fixed mold 10. At the start of moving the movable mold 20, a displacement of the ejector plate 50 relative to the movable mold 20 is prevented since the engaging pins 17 do not interfere with the ejector plate 50. When the movable mold 20 is displaced by a specified (predetermined or predeterminable) amount, preferably by about substantially half the entire movement stroke, the large-diameter portions 17c of the engaging pins 17 reach positions where they interfere with the bottom surfaces of the recesses 53 of the ejector plate 50 as shown in FIG. 3. Then, the ejector plate 50 is moved forward relative to the movable mold 20 by a further backward movement of the movable mold 20, and the ejector pins 90 supported on the ejector plate 50 gradually project from the attachment surface 23B of the movable mold 20. When the ejector plate 50 preferably substantially reaches a mold opening position where it is held substantially in contact with the movable molding plate 23 of the movable mold 20, the molded article S is thrust up or away from the movable mold 20 by the ejector pins 90 and can be taken out. If the molded article S is taken out and the movable mold 20 is brought closer to the fixed mold 10 thereafter, the ejector plate 50 is automatically returned to the initial position where it is in contact with the movable mounting plate 22 of the movable mold 20 by the biasing forces of the spring portions 80.

As described above, according to this embodiment, the engaging pins 17 projecting from the fixed mold 10 interfere with the ejector plate 50 in the process of separating the movable mold 20 from the fixed mold 10 at the time of opening the mold, whereby the ejector plate 50 is moved forward relative to the movable mold 20 and the leading ends of the ejector pins 90 project from the movable mold 20. Thus, the molded article S can be taken out in the mold opening step, making it unnecessary to take the molded article S out in a separate step. As a result, the molding cycle can be shortened. Further, since the ejector pins 90 project from the movable mold 20 due to the interference of the ejector plate 50 and the engaging pins 17, it is not necessary to separately provide an ejecting device for moving the ejector pins 90 forward and backward, thereby enabling the mold and the molding apparatus to be made smaller.

Further, the large-diameter portion(s) 17C preferably having a larger diameter than the inner diameter of the respective engaging hole(s) 52 of the ejector plate 50 is/are provided at the leading ends of the shaft portion(s) 17A of the engaging pin(s) 17, and can interfere with the bottom surface(s) of the recesse(s) 53 of the ejector plate 50. Thus, the engaging pin(s) 17 directly come(s) into engagement with the ejector plate 50, thereby securing the projecting movements of the one or more ejector pins 90.

Since the movable mold 20 is formed with the one or more insertion holes 29 for permitting the at least partial entrance and exit of the leading ends of the engaging pin(s) 17 thereinto and therefrom by communicating with the engaging hole(s) 52 via the recess(es) 53, the engaging pin(s) 17 need(s) not be entirely accommodated in the mold. As a result, the movable mold 20 can be made thinner to make the mold even smaller.

Accordingly, to shorten a molding cycle and to make a mold and a molding apparatus smaller, a fixed mold 10 is provided with one or more engaging pins 17 (as a preferred engaging member) projecting toward a movable mold 20. Each engaging pin 17 includes a shaft portion 17A and a large-diameter portion 17C formed at the leading end of the shaft portion 17A to bulge out. !n the process of separating the movable mold 20 at the time of opening a mold, the large-diameter portions 17C of the engaging pins 17 interfere or engage an ejector plate 50, preferably with the bottom surfaces of recesses 53 of the ejector plate 50, whereby the ejector plate 50 is moved forward relative to the movable mold 20 and leading end portions of ejector pins 90 project from the movable mold 20.

### <Other Embodiments>

The present invention is not limited to the above described and illustrated embodiment. For example, the following embodiments are also embraced by the technical scope of the present invention as defined by the claims. Beside the following embodiments, various changes can be made without departing from the scope and spirit of the present invention as defined by the claims.

According to the present invention, two or more pairs of engaging pins or members may at least partly project from the fixed mold.

According to the present invention, it is sufficient for the ejector plate to be formed with a portion which can interfere with the engaging pin, and the one or more recesses may not be formed.

Even though in the preferred embodiment the shaft portion 17A is provided with the large diameter portion 17C, it should be understood that the invention also covers an embodiment in which a projecting portion such as a pin or the like projection radially projects from shaft portion 17A so as to engage the ejector plate, preferably an edge portion of the engaging hole 52.

### LIST OF REFERENCE NUMERALS

- S: molded article
- 10: fixed mold
- 17: engaging pin (engaging member)
- 17A: shaft portion
- 17C: large-diameter portion (projecting portion)
- 20: movable mold
- 29: insertion hole
- 50: ejector plate
- 52: engaging hole
- 53: recess
- 90: ejector pin (ejector member)

## Claims

1. A mold assembly for injection molding, comprising:
a fixed mold (10),
a movable mold (20) arranged to be movable with respect to the fixed mold (10),
an ejector pin (90), and
an ejector plate (50) which is movable with respect to the movable mold (20) and supports the ejector pin (90),
wherein the fixed mold (10) includes at least a first engaging member (17) and at least a second engaging member (17), and the engaging members (17) engage the ejector plate (50) in the process of separating the movable mold (20) at the time of opening the mold, whereby the ejector plate (50) is moved forward relative to the movable mold (20) to cause a leading end portion of the ejector pin (90) to at least partly project from the movable mold (20), the second engaging member (17) being provided substantially opposed to the first engaging member (17) with respect to the center of the fixed mold (10), and
the ejector pin (90) being configured to thrust out a molded article (S) attached to the movable mold (20) when the ejector plate (50) reaches a mold opening position.
**characterized in that**
the engaging members (17) have a shaft portion (17A) and are dividable into leading-end portions and base-end portions by a coupling portion (17E) provided at an intermediate portion of the shaft portion (17A) with a screw fastening function.

2. A mold assembly for injection molding according to claim 1, wherein the at least first and second engaging members (17) are positioned substantially point symmetric with respect to the center of the fixed mold (10).

3. A mold assembly for injection molding according to claim 1 or 2, wherein the engaging member (17) projecting toward the movable mold (20).

4. A mold assembly for injection molding according one or more of the preceding claims, wherein the ejector plate (50) which is so incorporated into or mounted to the movable mold (20) as to be movable forward and backward.

5. A mold assembly for injection molding according to one or more of the preceding claims, wherein the ejector plate (50) is formed with an engaging hole (52) through which a shaft portion (17A) of the engaging member (17) is at least partly insertable, and a projecting portion (17C) which projects from shaft portion (17A), preferably has a diameter larger than the inner diameter of the engaging hole (52), and can interfere with the opening edge of the engaging hole (52) of the ejector plate (50) is formed at the leading end of the shaft portion (17A) of the engaging member (17).

6. A mold assembly for injection molding according to one or more of the preceding claims, wherein the movable mold (20) is formed with an insertion hole (29) for permitting the entrance and exit of the leading end of the engaging member (17) thereinto and therefrom preferably by communicating with the engaging hole (52).

7. A mold assembly for injection molding according to one or more of the preceding claims, wherein the ejector plate (50) is held substantially in contact with the movable mold (20) by the biasing force of a biasing member (80) unless being moved relative to the movable member (20) due to the engagement of the engaging member (17) with the ejector plate (50).

8. A method of operating a mold assembly for injection molding for thrusting out a molded article (S) attached thereto, the mold comprising a fixed mold (10), a movable mold (20) arranged to be movable with respect to the fixed mold (10) and an ejector pin (90), the method comprising the following steps:
moving the movable member (20) with respect to the fixed mold (10) so as to at least partly open the mold, and
moving the ejector pin (90) for thrusting out a molded article (S) attached to the mold by engaging an ejector plate (50) which is movable with respect to the movable mold (20) and supports the ejector pin (90) with at least a first engaging member (17) and at least a second engaging member (17) provided on the fixed mold (10), whereby the ejector plate (50) is moved forward relative to the movable mold (20) to cause a leading end portion of the ejector pin (90) to at least partly project from the movable mold (20)
providing said at least second engaging member (17) substantially opposed to the first engaging member (17) with respect to the center of the fixed mold (10), and thrusting out a molded article (S) attached to the movable mold (20) when the ejector plate (50) reaches a mold opening position
**characterized by**
dividing the engaging member (17) having a shaft portion (17A) into leading-end portions and base-end portions by a coupling portion (17E) provided at an intermediate portion of the shaft portion (17A) with a screw fasting function.

9. A method according to claim 8, further comprising a step of positioning the at least first and second engaging members (17) substantially point symmetric with respect to the center of the fixed mold (10).

10. A method according to claim 8 or 9, further comprising a step of holding the ejector plate (50) substantially in contact with the movable mold (20) by the biasing force of a biasing member (80) unless the ejector plate (50) is moved relative to the movable member (20) due to the engagement of the engaging member (17) with the ejector plate (50).

11. A method according to any of claims 8 to 10, wherein the leading end of the engaging member (17) is at least partly inserted into and retracted from an insertion hole (29) of the movable mold (20).

## Patentansprüche

1. Formwerkzeuganordnung zum Spritzgießen, die umfasst:
ein festes Formwerkzeug (10),
ein bewegliches Formwerkzeug (20), das eingerichtet ist, um in Bezug auf das feste Formwerkzeug (10) beweglich zu sein,
einen Ejektor- bzw. Auswerferstift (90), und
eine Ejektorplatte (50), die in Bezug auf das bewegliche Formwerkzeug (20) beweglich ist und den Ejektorstift (90) hält,
wobei das feste Formwerkzeug wenigstens ein erstes Eingreifelement (17) und wenigstens ein zweites Eingreifelement (17) umfasst, und die Eingreifelemente (17) in dem Verfahren zum Trennen des beweglichen Formwerkzeugs (20) zur Zeit des Öffnens der Form in die Ejektorplatte (50) eingreifen, wobei die Ejektorplatte (50) relativ zu dem beweglichen Formwerkzeug (20) vorwärts bewegt wird, um zu bewirken, dass ein führender Endabschnitt des Ejektorstifts (90) wenigstens teilweise von dem beweglichen Formwerkzeug (20) vorsteht, wobei das zweite Eingreifelement (17) in Bezug auf die Mitte des festen Formwerkzeugs (10) im Wesentlichen entgegengesetzt zu dem ersten Eingreifelement (17) bereitgestellt ist, und der Ejektorstift (90) aufgebaut ist, um einen Formartikel (S), der an dem beweglichen Formwerkzeug (20) haftet, heraus zu schieben, wenn die Ejektorplatte (50) eine Formöffnungsposition erreicht,
**dadurch gekennzeichnet, dass**
die Eingreifelemente (17) einen Achsenabschnitt (17A) haben und durch einen Verbindungsabschnitt (17E), der an einem Zwischenabschnitt des Achsenabschnitts (17A) mit einer Schraubbefestigungsfunktion bereitgestellt ist, in führende Endabschnitte und Fuß- bzw. Sockelendabschnitte unterteilbar sind.

2. Formwerkzeuganordnung zum Spritzgießen nach Anspruch 1, wobei die wenigstens ersten und zweiten Eingreifelemente (17) im Wesentlichen punktsymmetrisch in Bezug auf die Mitte der festen Form (10) positioniert sind.

3. Formwerkzeuganordnung zum Spritzgießen nach Anspruch 1 oder 2, wobei das Eingreifelement (17) in Richtung des beweglichen Formwerkzeugs (20) vorsteht.

4. Formwerkzeuganordnung zum Spritzgießen nach einem oder mehreren der vorangehenden Ansprüche, wobei die Ejektorplatte (50) derart in das bewegliche Formwerkzeug (20) eingebaut oder daran montiert ist, dass sie vorwärts und rückwärts beweglich ist.

5. Formwerkzeuganordnung zum Spritzgießen nach einem oder mehreren der vorangehenden Ansprüche, wobei die Ejektorplatte (50) mit einem Eingreifloch (52) ausgebildet ist, durch das ein Achsenabschnitt (17A) des Eingreifelements (17) wenigstens teilweise einsetzbar ist, und ein vorstehender Abschnitt (17C), der von dem Achsenabschnitt (17A) vorsteht, der bevorzugt einen größeren Durchmesser als den Innendurchmesser des Eingreiflochs (52) hat und mit dem Öffnungsrand des Eingreiflochs (52) der Ejektorplatte (50) eingreifen kann, an dem führenden Ende des Achsenabschnitts (17A) des Eingreifelements (17) ausgebildet ist.

6. Formwerkzeuganordnung zum Spritzgießen nach einem oder mehreren der vorangehenden Ansprüche, wobei das bewegliche Formwerkzeug (20) mit einem Einsetzloch (29) ausgebildet ist, um das Eintreten und Austreten des führenden Endes des Eingreifelements (17) in es hinein und aus ihm heraus vorzugsweise durch Verbinden mit dem Eingreifloch (52) zu erlauben.

7. Formwerkzeuganordnung zum Spritzgießen nach einem oder mehreren der vorangehenden Ansprüche, wobei die Ejektorplatte (50) durch die Vorspannkraft eines Vorspannelements (80) im Wesentlichen in Kontakt mit dem beweglichen Formwerkzeug (20) gehalten wird, es sei denn, sie wird aufgrund des Eingreifens des Eingreifelements (17) mit der Eingreifplatte (50) relativ zu dem beweglichen Formwerkzeug (20) bewegt.

8. Verfahren zum Betreiben einer Formwerkzeuganordnung zum Spritzgießen zum Herausschieben eines daran haftenden Formartikels (S), wobei das Formwerkzeug ein festes Formwerkzeug (10), ein bewegliches Formwerkzeug (20), das eingerichtet ist, um in Bezug auf das feste Formwerkzeug (10) beweglich zu sein, und einen Ejektorstift (90) umfasst, wobei das Verfahren die folgenden Schritte umfasst:
Bewegen des beweglichen Formwerkzeugs (20) in Bezug auf das feste Formwerkzeug (10), um das Formwerkzeug wenigstens teilweise zu öffnen, und
Bewegen des Ejektorstifts (90) zum Herausschieben eines an dem Formwerkzeug haftenden Formartikels (S) durch Eignreifen in eine Ejektorplatte (50), die in Bezug auf das bewegliche Formwerkzeug (20) beweglich ist und den Ejektorstift (90) hält, wobei wenigstens ein erstes Eingreifelement (17) und wenigstens ein zweites Eingreifelement (17) auf dem festen Formwerkzeug (10) bereitgestellt sind, wodurch die Ejektorplatte (50) relativ zu dem beweglichen Formwerkzeug (20) vorwärts bewegt wird, um zu bewirken, dass ein führender Endabschnitt des Ejektorstifts (90) wenigstens teilweise von dem beweglichen Formwerkzeug (20) vorsteht,
Bereitstellen des wenigstens zweiten Eingreifelements (17) im Wesentlichen entgegengesetzt zu dem ersten Eingreifelement (17) in Bezug auf die Mitte des festen Formwerkzeugs (10), und
Herausschieben eines an dem beweglichen Formwerkzeug (20) haftenden Formartikels (S), wenn die Ejektorplatte (50) eine Formöffnungsposition erreicht,
**gekennzeichnet durch**
Unterteilen des Eingreifelements (17) mit einem Achsenabschnitt (17A) durch einen Verbindungsabschnitt (17E), der an einem Zwischenabschnitt des Achsenabschnitts (17A) mit einer Schraubbefestigungsfunktion bereitgestellt ist, in führende Endabschnitte und Fußendabschnitte.

9. Verfahren nach Anspruch 8, das ferner einen Schritt zum Positionieren der wenigstens ersten und zweiten Eingreifelemente (17) im Wesentlichen punktsymmetrisch in Bezug auf die Mitte der festen Form (10) umfasst.

10. Verfahren nach Anspruch 8 oder 9, das ferner einen Schritt zum Halten der Ejektorplatte (50) im Wesentlichen in Kontakt mit dem beweglichen Formwerkzeug (20) durch die Vorspannkraft eines Vorspannelements (80) umfasst, es sei denn, die Ejektorplatte (50) wird aufgrund des Eingreifens des Eingreifelements (17) mit der Ejektorplatte (50) relativ zu dem beweglichen Formwerkzeug (20) bewegt.

11. Verfahren nach einem der Ansprüche 8 bis 10, wobei das führende Ende des Eingreifelements (17) zumindest teilweise in ein Einsetzloch (29) des beweglichen Formwerkzeugs (20) eingesetzt und aus diesem heraus gezogen wird.

## Revendications

1. Ensemble de moulage pour le moulage par injection, comprenant :
un moule stationnaire (10),
un moule mobile (20) agencé de manière à pouvoir être déplacé par rapport au moule stationnaire (10),
une tige d'éjection (90), et
une plaque d'éjection (50) qui peut être déplacée par rapport au moule mobile (20) et qui soutient la tige d'éjection (90),
dans lequel le moule stationnaire (10) inclut au moins un premier élément d'engagement (17) et au moins un second élément d'engagement (17), et dans lequel les éléments d'engagement (17) engagent la plaque d'éjection (50) dans le processus de séparation du moule mobile (20) au moment de l'ouverture du moule, opération pendant laquelle la plaque d'éjection (50) est déplacée vers l'avant par rapport au moule mobile (20) afin de provoquer qu'une partie terminale de guidage de la tige d'éjection (90) se projette au moins en partie depuis le moule mobile (20), que le second élément d'engagement (17) soit prévu sensiblement à l'opposé du premier élément d'engagement (17) par rapport au centre du moule stationnaire (10), et dans lequel la tige d'éjection (90) est configurée pour pousser vers l'extérieur un article moulé (S) fixé sur le moule mobile (20) lorsque la plaque d'éjection (50) atteint une position d'ouverture de moule,
**caractérisé en ce que**
les éléments d'engagement (17) ont une partie en forme de tige (17A) et peuvent être divisés en parties à extrémité de guidage et en parties à extrémité de base par une partie de couplage (17E) prévue sur une partie intermédiaire de la partie en forme de tige (17A) avec une fonction de fixation par vis.

2. Ensemble de moulage pour le moulage par injection conformément à la revendication 1, dans lequel le au moins un premier élément d'engagement (17) et le au moins un second élément d'engagement (17) sont positionnés sensiblement avec une symétrie ponctuelle par rapport au centre du moule stationnaire (10).

3. Ensemble de moulage pour le moulage par injection conformément à l'une ou l'autre des revendications 1 et 2, dans lequel l'élément d'engagement (17) se projette vers le moule mobile (20).

4. Ensemble de moulage pour le moulage par injection conformément à l'une ou plus des revendications précédentes, dans lequel la plaque d'éjection (50) est incorporée jusque dans ou montée sur le moule mobile (20) de telle sorte qu'elle peut être déplacée vers l'avant et vers l'arrière.

5. Ensemble de moulage pour le moulage par injection conformément à l'une ou plus des revendications précédentes, dans lequel la plaque d'éjection (50) est formée avec un trou d'engagement (52) à travers lequel une partie en forme de tige (17A) de l'élément d'engagement (17) peut être insérée au moins en partie, et dans lequel une partie de projection (17C), qui se projette depuis la partie en forme de tige (17A), qui a de préférence un diamètre qui est plus grand que le diamètre intérieur du trou d'engagement (52) et qui peut interférer avec le bord d'ouverture du trou d'engagement (52) de la plaque d'éjection (50), est formée sur l'extrémité de guidage de la partie en forme de tige (17A) de l'élément d'engagement (17).

6. Ensemble de moulage pour le moulage par injection conformément à l'une ou plus des revendications précédentes, dans lequel le moule mobile (20) est formé avec un trou d'insertion (29) afin de permettre l'entrée et la sortie de l'extrémité de guidage de l'élément d'engagement (17) jusque dans celui-ci et depuis celui-ci, de préférence par la communication avec le trou d'engagement (52).

7. Ensemble de moulage pour le moulage par injection conformément à l'une ou plus des revendications précédentes, dans lequel la plaque d'éjection (50) est maintenue sensiblement en contact avec le moule mobile (20) par la force de polarisation d'un élément de polarisation (80) à moins d'être déplacée par rapport au moule mobile (20) suite à l'engagement de l'élément d'engagement (17) avec la plaque d'éjection (50).

8. Procédé de fonctionnement d'un ensemble de moulage pour le moulage par injection afin de pousser vers l'extérieur un article moulé (S) fixé dessus, l'ensemble de moulage comprenant un moule stationnaire (10), un moule mobile (20) agencé de manière à pouvoir être déplacé par rapport au moule stationnaire (10), une tige d'éjection (90), le procédé comprenant les étapes suivantes :
le déplacement de l'élément mobile (20) par rapport au moule stationnaire (10) de manière à ouvrir le moule au moins en partie, et
le déplacement de la tige d'éjection (90) afin de pousser vers l'extérieur un article moulé (S) fixé sur le moule par l'engagement d'une plaque d'éjection (50) qui peut être déplacée par rapport au moule mobile (20) et qui soutient la tige d'éjection (90) avec au moins un premier élément d'engagement (17) et au moins un second élément d'engagement (17), prévus sur le moule stationnaire (10), opération pendant laquelle la plaque d'éjection (50) est déplacée vers l'avant par rapport au moule mobile (20) afin de provoquer qu'une partie terminale de guidage de la tige d'éjection (90) se projette au moins en partie depuis le moule mobile (20),
la fourniture dudit au moins un second élément d'engagement (17) qui est sensiblement opposé au premier élément d'engagement (17) par rapport au centre du moule stationnaire (10), et
la poussée vers l'extérieur d'un article moulé (S) fixé sur le moule mobile (20) lorsque la plaque d'éjection (50) atteint une position d'ouverture de moule,
**caractérisé par**
la division de l'élément d'engagement (17), qui a une partie en forme de tige (17A), divisée en parties à extrémité de guidage et en parties à extrémité de base par une partie de couplage (17E) prévue sur une partie intermédiaire de la partie en forme de tige (17A) avec une fonction de fixation par vis.

9. Procédé selon la revendication 8, comprenant en outre une étape consistant à positionner le au moins un premier élément d'engagement (17) et le au moins un second élément d'engagement (17) sensiblement avec une symétrie ponctuelle par rapport au centre du moule stationnaire (10).

10. Procédé selon l'une ou l'autre des revendications 8 et 9, comprenant en outre une étape consistant à maintenir la plaque d'éjection (50) sensiblement en contact avec le moule mobile (20) par la force de polarisation d'un élément de polarisation (80) à moins que la plaque d'éjection (50) soit déplacée par rapport au moule mobile (20) suite à l'engagement de l'élément d'engagement (17) avec la plaque d'éjection (50).

11. Procédé selon l'une quelconque des revendications 8 à 10, dans lequel l'extrémité de guidage de l'élément d'engagement (17) est insérée au moins en partie jusque dans et est rétractée depuis un trou d'insertion (29) du moule mobile (20).
